# EUROPÄISCHE PATENTSCHRIFT

(11) **EP 3 837 959 B1**
(45) Veröffentlichungstag und Bekanntmachung des Hinweises auf die Patenterteilung: **27.03.2024**
(21) Anmeldenummer: 20200672.2
(22) Anmeldetag: 08.10.2020
(51) Int. Cl.: A01D 75/18, G01V 3/08

(54) **LANDWIRTSCHAFTLICHES ARBEITSGERÄT**
AGRICULTURAL TOOL
APPAREIL DE TRAVAIL AGRICOLE

(30) Priorität: 19.12.2019 DE 102019220213
(43) Veröffentlichungstag der Anmeldung: 23.06.2021
(73) Patentinhaber: CLAAS Selbstfahrende Erntemaschinen GmbH, 33428 Harsewinkel (DE)
(72) Erfinder: Buda, Andreas, 33330 Gütersloh (DE); Uhlmann, Patrick, 33775 Versmold (DE)
(74) Vertreter: CLAAS Gruppe

(56) Entgegenhaltungen:
- DE-A1- 19 912 407
- DE-A1-102015 122 305
- DE-U1-202017 001 807
- US-A1- 2012 322 520
- Helenawenzel Autorin : ET AL: "Fremdkörperdetektion EinAuszugausdem StandderForschung", , 31. Oktober 2019 (2019-10-31), XP055781919, Gefunden im Internet: URL:https://www.biomasseinstitut.de/wp-con tent/uploads/Bericht-Fremdkörperdetektion- 2019-1.pdf [gefunden am 2021-03-04]

## Beschreibung

Die vorliegende Erfindung betrifft ein landwirtschaftliches Arbeitsgerät zum Aufnehmen von Erntegut nach dem Oberbegriff des Anspruchs 1.

Ein solches Arbeitsgerät ist aus DE 10 2015 122 305 A1 bekannt. Weiterer relevanter Stand der Technik ist: URL:https://www.biomasseinstitut.de/wp-content/uploads/ Bericht-Fremdkörperdetektion-2019-1.pdf, DE 199 12 407 A1, US 2012/322520 A1, DE 20 2017 001807 U1.

In von einer Anbaufläche aufzunehmendem Erntegut können sich Fremdkörper befinden, die, wenn sie in die dem Gutaufnehmer nachgelagerte Verarbeitungseinheit gelangen, dort kostspielige Schäden verursachen können. Um solche Fremdkörper erkennen und im Falle ihres Auftretens am Erreichen der Verarbeitungseinheit hindern zu können, sind diverse Lösungen bekannt. So können z.B. die Achsen von den Förderkanal begrenzenden Walzen quer zur Förderrichtung auslenkbar sein, um großen Objekten auszuweichen, und ein Schalter kann an die Achse gekoppelt sein, um bei übermäßiger Auslenkung die Gutförderung oder den Betrieb der Verarbeitungseinheit zu unterbrechen. Da die Achse aber auch durch das Erntegut selber auslenkbar ist, kann ein solcher Schalter allenfalls Schutz vor großen Fremdkörpern bieten. Insbesondere metallische Fremdkörper können aber bereits in einer durch einen solchen Schalter nicht erfassbaren Größe massive Schäden verursachen.

Körper aus metallischem Material können grundsätzlich anhand ihres Einflusses auf das Magnetfeld einer Sonde erfasst werden. In der Praxis gelingt dies jedoch nur unbefriedigend, weil der Einfluss von Körpern aus ferromagnetischem Metall um ein Vielfaches größer ist als der von nichtferromagnetischen Körpern. Eine Sonde, die eingestellt ist, um auf ferromagnetische Körper erst dann anzusprechen, wenn deren Größe ein kritisches Maß überschreitet, ist daher in der Regel nicht empfindlich genug, um gefährliche Objekte aus nichtferromagnetischem Metall wie etwa Edelstahl zu erfassen.

DE 10 2015 122 305 A1 schlägt vor, Fremdkörper aus Edelstahl mit Hilfe eines Radarsensors zu erfassen, der, an der Fahrerkabine des Arbeitsgeräts montiert, das Vorfeld der Maschine überwacht. Ein solcher Sensor spricht auf metallische Objekte im Vorfeld an, unabhängig davon, ob diese vom Arbeitsgerät aufgenommen werden können oder dafür zu dicht am Boden liegen. Wenn ein solcher Sensor wiederholt Alarme auslöst und daraufhin der Fahrer des Arbeitsgeräts die Arbeit unterbricht, um das Objekt zu suchen und zu entfernen, so kann dies die Arbeit erheblich verzögern. Stellt der Fahrer, nachdem er das Objekt gefunden hat, fest, dass dieses nicht hätte aufgenommen werden können, dann besteht die Gefahr, dass er spätere Warnungen des Sensors ignoriert und so die Schutzwirkung zunichte macht.

Es besteht daher Bedarf nach einem Arbeitsgerät, das einen wirksamen Schutz der Verarbeitungseinheit bei minimaler Wahrscheinlichkeit von Fehlalarmen bietet.

Der Bedarf wird befriedigt, indem bei einem landwirtschaftlichen Arbeitsgerät mit einem Gutaufnehmer zum Aufnehmen von Erntegut von einer Fläche, einer Verarbeitungseinheit zum Verarbeiten des Ernteguts und einem den Gutaufnehmer mit der Verarbeitungseinheit verbindenden Förderkanal einen Hochfrequenzsensor angeordnet ist, um elektromagnetische Hochfrequenzwellen in den Förderkanal zu emittieren und ein von einem Fremdkörper im Förderkanal zurückgeworfenes Echo zu erfassen.

Die Frequenz der Hochfrequenzwellen liegt vorzugsweise zwischen 1 und 10 GHz.

Um eine untergrundarme Erfassung des Echos zu ermöglichen, ist der Förderkanal an wenigstens einer ersten Seite nichtreflektierend, und der Hochfrequenzsensor (oder zumindest ein Sender desselben) ist an einer der ersten Seite gegenüberliegenden zweiten Seite des Förderkanals montiert, um in Richtung der ersten Seite zu emittieren.

Eine die nichtreflektierende zweite Seite kann ein die Hochfrequenzwellen absorbierendes Material aufweisen. Insbesondere für Frequenzen im oben genannten Frequenzbereich kommt als absorbierendes Material ein mit Graphit versetzter Schaumstoff in Betracht.

Alternativ kann die nichtreflektierende erste Seite auch ganz einfach offengelassen sein. Wenn die erste Seite eine für die Hochfrequenzwellen transparente Wand, z.B. aus Kunststoff oder nichtmetallischem Verbundmaterial, umfasst, ist sie eventuell nicht vollständig nichtreflektierend, die Reflexion ist aber auf jeden Fall deutlich geringer als wenn die Wand aus Metall bestünde.

Um das Erntegut einschließlich eventuell enthaltener Fremdkörper dicht am Sensor vorbeiführen zu können, ist letzterer vorzugsweise am Boden des Förderkanals angeordnet. Eine solche Anordnung ist auch vorteilhaft, wenn der Boden die oben erwähnte zweite Seite ist, da dann die Schwerkraft genügt, um ein Entweichen von Erntegut über die gegenüberliegende offene erste Seite zu verhindern.

Je weiter stromaufwärts im Förderkanal der Sensor angeordnet ist, umso mehr Zeit steht im Falle der Erfassung eines metallischen Körpers im Erntegut zur Verfügung, um die Verarbeitungseinheit zum Stehen zu bringen oder sie auf andere geeignete Weise vor dem Fremdkörper zu schützen. Wenn der Gutaufnehmer und wenigstens ein Teil des Förderkanals in an sich bekannter Weise durch ein abnehmbares Vorsatzgerät gebildet sind, ist deshalb und der Hochfrequenzsensor vorzugsweise an dem Vorsatzgerät vorgesehen.

Um die Ausbreitungsrichtung der Hochfrequenzwellen zu steuern, kann der Hochfrequenzsensor eine Mehrzahl von Sendern zum Ausstrahlen einer Hochfrequenzwelle mit einem für jeden Sender spezifisch steuerbaren Phasenversatz umfassen.

Um die Empfindlichkeit für Echos aus einem bestimmten Teil des Förderkanals zu steigern, kann der Hochfrequenzsensor eine Mehrzahl von Empfängern und eine Überlagerungseinheit zum Überlagern von Ausgangssignalen der Empfänger mit einem für jeden Empfänger spezifisch steuerbaren Phasenversatz umfassen.

Mit Hilfe einer Phasensteuereinheit, die eingerichtet ist, durch Steuern der Phasenversätze Teile des Förderkanals sukzessive abzutasten, kann Aufschluss über die Position eines Fremdkörpers im Förderkanal und/oder über seine Abmessungen gewonnen werden.

Darüber hinaus kann die Phasensteuereinheit eingerichtet sein, die Phasenversätze der Sender so festzulegen, dass die Signale der Sender an einer reflexionsfähigen Wand des Förderkanals destruktiv interferieren, um so ein von dieser Wand zurückgeworfenes Echo zu minimieren, bzw. die Phasenversätze der Empfänger so festzulegen, dass auf ein Echo der Wand zurückgehende Signale der Empfänger in der Überlagerungseinheit destruktiv interferieren.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein exemplarisches Arbeitsgerät;
- Fig. 2: ein Detail eines Maisgebisses;
- Fig. 3: einen Querschnitt durch einen Förderkanal des Arbeitsgeräts;und
- Fig. 4: einen schematischen Längsschnitt durch das Maisgebiss.

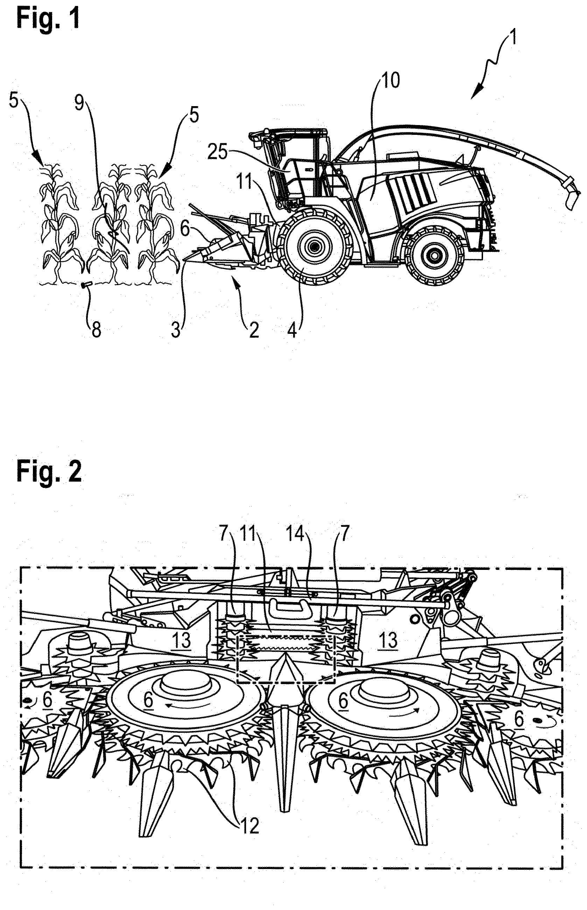

Fig. 1 zeigt als ein Ausführungsbeispiel eines erfindungsgemäßen Arbeitsgeräts einen Feldhäcksler 1. Als Vorsatzgerät 2 trägt der Feldhäcksler 1 ein Maisgebiss. Das Maisgebiss ist deutlich breiter als der Abstand zwischen Vorderrädern 4 des Feldhäckslers. Es trägt an einer Vorderkante 3 einer Bodenplatte im Betrieb oszillierende Messer, die Erntegut 5 knapp über dem Boden abschneiden. Flach auf dem Boden liegende kleine Metallteile 8 werden dabei nicht erfasst; Metallteile 9, die von böswillgen Personen bodenfern im Erntegut 5 angebracht werden, können so jedoch vom Vorsatzgerät 2 erfasst werden.

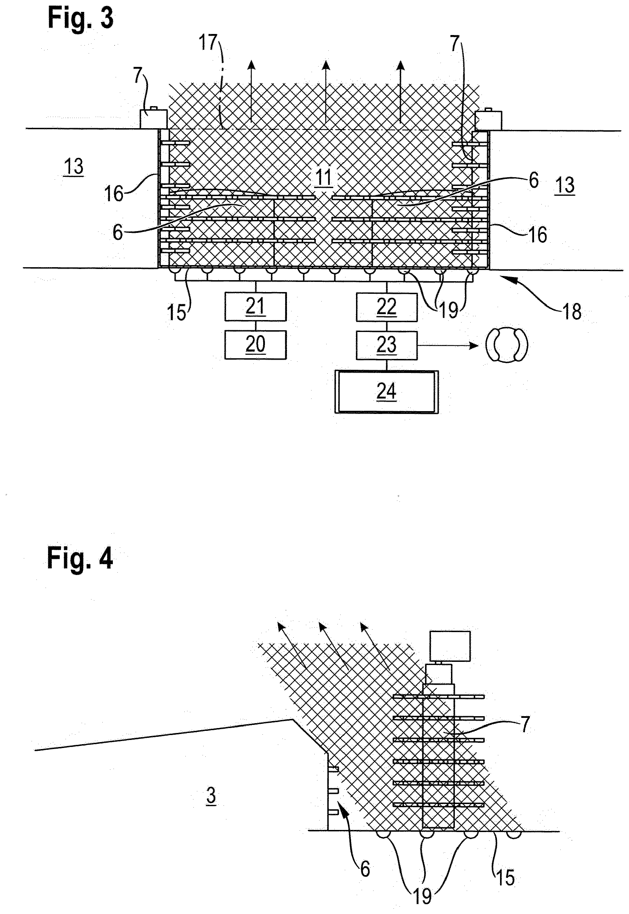

Auf der Bodenplatte sind um vertikale Achse drehangetriebene Zahnwalzen 6, 7 (s. Fig. 2, 3) verteilt, die das geschnittene Erntegut zusammenraffen. Um es einem Förderkanal 11 zuzuführen, der sich zwischen den Vorderrädern 4 hindurch zu einem Häckselwerk im Innern der Karosserie 10 des Feldhäckslers 1 erstreckt, müssen die Zahnwalzen 6, 7 das Erntegut auch jeweils von den Seiten zur Mitte des Maisgebisses schieben. Wie anhand der Vorderansicht der Fig. 2 nachvollziehbar, rotieren die entlang der Vorderkante des Maisgebisses verteilten Zahnwalzen 6 jeweils links von der Mitte im Uhrzeiger- und rechts von der Mitte im Gegenuhrzeigersinn, um von den Messern 12 geschnittenes Erntegut zunächst von der Mitte fort, dann entlang der von der Mitte abgewandten Seiten der Zahnwalzen 6 nach hinten und schließlich zwischen Rückseiten der Zahnwalzen 6 und einer Rückwand 13 des Maisgebisses mittenwärts, zu einem Einlass des Förderkanals 11 geschoben zu werden. Zahnwalzen 7, die, jeweils höher und schmaler als die Zahnwalzen 6, auf beiden Seiten des Einlasses angeordnet sind, unterstützen die Einspeisung des Ernteguts in den Förderkanal 11. Zwischen den beiden mittleren Zahnwalzen 6 und den Zahnwalzen 7 liegt ein Stück der Bodenplatte des Maisgebisses nach oben frei. Auch der Förderkanal 11 selber kann - hier abgesehen von einem ihn überbrückenden stabilisierenden Bügel 14 - nach oben offen sein.

Fig. 3 zeigt einen schematischen Querschnitt durch den Förderkanal 11. Der Förderkanal hat einen rinnenartigen Querschnitt mit einer Bodenplatte 15, Seitenwänden 16 und einer offenen Oberseite 17. Am vorderen (vom Betrachter der Fig. 3 abgewandten) Ende der Seitenwände 16, zum Teil durch die daran anschließende Rückwand 13 verdeckt, sind die Zahnwalzen 6, 7 zu erkennen.

Die Bodenplatte 15 ist mit einem nach oben emittierenden Hochfrequenzsensor 18 versehen, hier in Form einer Vielzahl von über die Bodenplatte 15 - vorzugsweise in Form eines regelmäßigen Gitters - verteilten Sender-Empfängern 19. Die Sender-Empfänger 19 sind einerseits mit einer gemeinsamen Signalquelle 20 über eine Phasensteuereinheit 21 verbunden, die ausgelegt ist, um jedem Sender-Empfänger 19 eine spezifische Phasenverzögerung der von ihm ausgestrahlten Funkwelle aufzuprägen und auf diese Weise die Ausbreitung einer aus den Funkwellen der einzelnen Sender-Empfänger überlagerten Wellenfront zu steuern. So können die Sender-Empfänger 19 zum Beispiel derart phasensynchronisiert werden, dass die überlagerte Wellenfront die Zahnwalzen 6, 7 nicht erreicht und von diesen kein - aufgrund ihrer Rotation zeitlich veränderliches - Echo zu den Sender-Empfängern 19 zurückgelangt.

Im hier skizzierten Fall sind die Sender-Empfänger 19 phasensynchronisiert, um eine sich im Förderkanal 11 vertikal aufwärts ausbreitende, in Fig. 3 als kreuzschraffierte Fläche veranschaulichte Wellenfront zu erzeugen, die den Strom des Ernteguts im Förderkanal 11 auf im Wesentlichen seinem gesamten Querschnitt durchsetzt. So wirft ein Metallteil im Erntegutstrom, egal an welcher Stelle des Kanalquerschnitts es die Wellenfront quert, ein Echo zurück, das von den Sender-Empfängern 19 aufgefangen wird und eine Auswerteeinheit 23, an der die von den Sender-Empfängern 19 aufgefangenen Signale zusammenlaufen, veranlasst, einen Nothalt aller den Erntegutstrom fördernden Komponenten auszulösen und das Metallteil so am Erreichen des Häckselwerks zu hindern.

Denkbar ist alternativ, die Phasenverschiebungen der einzelnen Sender-Empfänger 19 periodisch so zu variieren, dass ihre Funkwellen zu einem gegebenen Zeitpunkt hauptsächlich in einen bestimmten Querschnittsbereich des Förderkanals 11 konstruktiv interferieren, und diesen Querschnittsbereich periodisch über den gesamten Querschnitt des Förderkanals 11 wandern zu lassen. Indem so der Kanalquerschnitt sukzessive abgetastet wird, kann aus dem Zeitpunkt, an dem ein Echo eines im Erntegutstrom mitgeführten Metallteils beobachtet wird, auf den Querschnittsbereich geschlossen werden, aus dem das empfangene Echo herrührt. Indem z.B. der betreffende Querschnittsbereich auf einem Bildschirm 24 in einem Bild des Kanalquerschnitts hervorgehoben wird, kann zum einen einem Fahrer des Feldhäckslers angezeigt werden, wo sich im Förderkanal 11 das Metallteil befindet, und auf diese Weise dessen Beseitigung erleichtert werden, zum anderen kann, wenn die abgetasteten Querschnittsbereiche kleiner als das Metallteil sind, aus der Zahl und Verteilung der Querschnittsbereiche, aus denen ein Echo empfangen wird, auf die Form und Größe des Echo erzeugenden Metallteils oder eventuell auf das Vorhandensein mehrerer Metallteile gleichzeitig geschlossen werden.

Anstatt selektiv in bestimmte Richtungen zu emittieren, kann der Sensor 18 für aus diesen Richtungen herrührende Echos selektiv empfindlich gemacht werden, indem von den einzelnen Sender-Empfängern 19 aufgefangene Echosignale in einer Überlagerungseinheit 22 jeweils mit einer spezifischen Phasenverschiebung aufaddiert werden, wobei die Phasenverschiebungen der einzelnen Sender-Empfänger 19 jeweils so festgelegt werden, dass Echos aus einem jeweils interessierenden Raumbereich sich konstruktiv überlagern.

Natürlich können beide Ansätze auch kombiniert werden, wobei insbesondere das sukzessive Abtasten von Teilbereichen des Kanalquerschnitts vereinfacht werden kann, wenn die Raumbereiche, in die bevorzugt emittiert wird, und diejenigen, aus denen die Echos konstruktiv überlagert werden, nicht deckungsgleich sind, sondern einander überschneiden und unabhängig voneinander veränderbar sind.

Denkbar ist auch, den Erntegutstrom im Normalbetrieb kontinuierlich auf seinem gesamten Querschnitt zu überwachen, um auszuschließen, dass ein Metallteil unerkannt bleibt, weil es sich während seines Durchgangs durch den Förderkanal zufällig immer gerade in dessen nicht abgetasteten Bereichen befindet. Ist jedoch auf diese Weise erst einmal ein Metallteil detektiert und die Förderung des Ernteguts angehalten worden, dann kann der Förderkanal 11 ohne Sicherheitseinbuße durch sukzessives Abtasten wie oben beschrieben bereichsweise abgesucht werden, um das Metallteil oder die Metallteile zu lokalisieren.

Wie anhand von Fig. 1 leicht vorstellbar, trifft die Wellenfront des Sensors 18 bei Emission vertikal nach oben nach Verlassen des Förderkanals 11 gegen die Unterseite einer Fahrerkabine 25. Ein an dieser Unterseite reflektiertes Echo kann z.B. anhand seiner im Vergleich zu einem Echo aus dem Förderkanal 11 großen Laufzeit erkannt und unterdrückt werden. Um es zu dämpfen, kann die Unterseite der Fahrerkabine mit einem die Hochfrequenzwellen absorbierenden Material, etwa einem graphithaltigen Schaumstoff, verkleidet sein. Denkbar ist aber auch, wie in Fig. 4 skizziert, die Phasenverschiebung der einzelnen Sender-Empfänger 19 so zu steuern, dass die Wellenfront schräg nach vorn emittiert wird und deswegen entweder an der Fahrerkabine 25 vorbeigeht oder von dieser nicht zu den Sender-Empfängern 19 reflektiert wird.

### Bezugszeichen

- 1: Feldhäcksler
- 2: Vorsatzgerät
- 3: Vorderkante
- 4: Vorderrad
- 5: Erntegut
- 6: Zahnwalze
- 7: Zahnwalze
- 8: Metallteil
- 9: Metallteil
- 10: Karosserie
- 11: Förderkanal
- 12: Messer
- 13: Rückwand
- 14: Bügel
- 15: Bodenplatte
- 16: Seitenwand
- 17: Oberseite
- 18: Hochfrequenzsensor
- 19: Sender-Empfänger
- 20: Signalquelle
- 21: Phasensteuereinheit
- 22: Überlagerungseinheit
- 23: Auswerteeinheit
- 24: Bildschirm
- 25: Fahrerkabine

## Patentansprüche

1. Landwirtschaftliches Arbeitsgerät mit einem Gutaufnehmer zum Aufnehmen von Erntegut (5) von einer Fläche, einer Verarbeitungseinheit zum Verarbeiten des Ernteguts (5) und einem den Gutaufnehmer mit der Verarbeitungseinheit verbindenden Förderkanal (11), **gekennzeichnet durch** einen Hochfrequenzsensor (18), der angeordnet ist, um elektromagnetische Hochfrequenzwellen in den Förderkanal (11) zu emittieren und ein von einem Fremdkörper im Förderkanal (11) zurückgeworfenes Echo zu erfassen.

2. Arbeitsgerät nach Anspruch 1, **dadurch gekennzeichnet, dass** die Frequenz der Hochfrequenzwellen im Bereich 1-10 GHz liegt.

3. Arbeitsgerät nach Anspruch 1 oder 2, **dadurch gekennzeichnet, dass** der Förderkanal (11) an wenigstens einer ersten Seite (17) nichtreflektierend ist, und dass der Hochfrequenzsensor (18) an einer der ersten Seite (17) gegenüberliegenden zweiten Seite (15) des Förderkanals (11) montiert ist, um in Richtung der ersten Seite (17) zu emittieren.

4. Arbeitsgerät nach Anspruch 3, **dadurch gekennzeichnet, dass** die erste Seite ein die Hochfrequenzwellen absorbierendes Material aufweist.

5. Arbeitsgerät nach Anspruch 1 oder 2, **dadurch gekennzeichnet, dass** der Förderkanal (11) an wenigstens einer ersten Seite (17) offen oder durch eine für die Hochfrequenzwellen transparente Wand verschlossen ist, und dass der Hochfrequenzsensor (18) an einer der ersten Seite (17) gegenüberliegenden zweiten Seite (15) des Förderkanals (11) montiert ist, um in Richtung der ersten Seite (17) zu emittieren.

6. Arbeitsgerät nach einem der vorhergehenden Ansprüche, **dadurch gekennzeichnet, dass** der Hochfrequenzsensor (18) an einem Boden (15) des Förderkanals (11) montiert ist.

7. Arbeitsgerät nach einem der vorhergehenden Ansprüche, **dadurch gekennzeichnet, dass** das Gutaufnehmer und wenigstens ein Teil des Förderkanals (11) durch einen abnehmbares Vorsatzgerät (2) gebildet sind, und dass der Hochfrequenzsensor (18) an dem Vorsatzgerät (2) vorgesehen ist.

8. Arbeitsgerät nach einem der vorhergehenden Ansprüche, **dadurch gekennzeichnet, dass** der Hochfrequenzsensor (18) eine Mehrzahl von Sendern (19) zum Ausstrahlen einer Hochfrequenzwelle mit einem für jeden Sender (19) spezifisch steuerbaren Phasenversatz umfasst.

9. Arbeitsgerät nach einem der vorhergehenden Ansprüche, **dadurch gekennzeichnet, dass** der Hochfrequenzsensor (18) eine Mehrzahl von Empfängern (19) und eine Überlagerungseinheit (22) zum Überlagern von Ausgangssignalen der Empfänger (19) mit einem für jeden Empfänger (19) spezifisch steuerbaren Phasenversatz umfasst.

10. Arbeitsgerät nach Anspruch 8 oder 9, **gekennzeichnet durch** eine Phasensteuereinheit (21), die eingerichtet ist, durch Steuern der Phasenversätze Teile des Förderkanals (11) sukzessive abzutasten.

11. Arbeitsgerät nach Anspruch 8, **dadurch gekennzeichnet, dass** eine Phasensteuereinheit (21) eingerichtet ist, die Phasenversätze der Sender (19) so festzulegen, dass die Signale der Sender (19) an einer reflexionsfähigen Wand (16) des Förderkanals (11) destruktiv interferieren.

12. Arbeitsgerät nach Anspruch 9, **dadurch gekennzeichnet, dass** eine Phasensteuereinheit eingerichtet ist, die Phasenversätze der Empfänger (19) so festzulegen, dass Signale der Empfänger (19), die auf ein Echo einer reflexionsfähigen Wand (16) des Förderkanals zurückgehen, in der Überlagerungseinheit (22) destruktiv interferieren.

## Claims

1. Agricultural implement having a crop pick-up for picking up harvested crop (5) from a surface, a processing unit for processing the harvested crop (5) and a conveyor channel (11) connecting the crop pick-up to the processing unit, **characterised by** a high-frequency sensor (18) which is arranged to emit electromagnetic high-frequency waves into the conveyor channel (11) and to detect an echo reflected by a foreign body in the conveyor channel (11).

2. Implement according to claim 1, **characterised in that** the frequency of the high-frequency waves is in the range 1-10 GHz.

3. Implement according to claim 1 or 2, **characterised in that** the conveyor channel (11) is non-reflective on at least a first side (17), and **in that** the radio frequency sensor (18) is mounted on a second side (15) of the conveyor channel (11) opposite the first side (17) in order to emit in the direction of the first side (17).

4. Implement according to claim 3, **characterised in that** the first side has a material which absorbs the high-frequency waves.

5. Implement according to claim 1 or 2, **characterised in that** the conveyor channel (11) is open on at least a first side (17) or closed by a wall transparent to the high-frequency waves, and **in that** the high-frequency sensor (18) is mounted on a second side (15) of the conveyor channel (11) opposite the first side (17) in order to emit in the direction of the first side (17).

6. Implement according to one of the preceding claims, **characterised in that** the high-frequency sensor (18) is mounted on a base (15) of the conveyor channel (11).

7. Implement according to one of the preceding claims, **characterised in that** the crop pick-up and at least a part of the conveyor channel (11) are formed by a removable attachment (2), and **in that** the high-frequency sensor (18) is provided on the attachment (2).

8. Implement according to one of the preceding claims, **characterised in that** the radio frequency sensor (18) comprises a plurality of transmitters (19) for emitting a radio frequency wave with a phase offset that can be specifically controlled for each transmitter (19) .

9. Implement according to one of the preceding claims, **characterised in that** the radio frequency sensor (18) comprises a plurality of receivers (19) and a superimposition unit (22) for superimposing output signals of the receivers (19) with a phase offset that can be specifically controlled for each receiver (19) .

10. Implement according to claim 8 or 9, **characterised by** a phase control unit (21) which is arranged to successively scan parts of the conveyor channel (11) by controlling the phase offsets.

11. Implement according to claim 8, **characterised in that** a phase control unit (21) is set up to determine the phase offsets of the transmitters (19) in such a way that the signals of the transmitters (19) interfere destructively at a reflective wall (16) of the conveyor channel (11).

12. Implement according to claim 9, **characterised in that** a phase control unit is set up to determine the phase offsets of the receivers (19) in such a way that signals of the receivers (19), which are due to an echo of a reflective wall (16) of the conveyor channel, interfere destructively in the superimposition unit (22).

## Revendications

1. Équipement de travail agricole, comprenant un ramasseur destiné à ramasser la récolte (5) sur une surface, une unité de traitement destinée à traiter la récolte (5), et un canal d'alimentation (11) reliant le ramasseur de récolte à l'unité de traitement, **caractérisé en ce qu'**il comprend un capteur haute fréquence (18) qui est disposé pour émettre des ondes électromagnétiques de haute fréquence dans le canal d'alimentation (11) et pour détecter un écho renvoyé par un corps étranger dans le canal d'alimentation (11).

2. Équipement de travail selon la revendication 1, **caractérisé en ce que** la fréquence des ondes de haute fréquence est comprise dans la plage allant de 1 à 10 GHz.

3. Équipement de travail selon la revendication 1 ou 2, **caractérisé en ce que** le canal d'alimentation (11) est non réfléchissant sur au moins un côté (17), et **en ce que** le capteur haute fréquence (18) est monté sur un deuxième côté (15) du canal d'alimentation (11) qui est opposé au premier côté (17), afin d'émettre en direction du premier côté (17).

4. Équipement de travail selon la revendication 3, **caractérisé en ce que** le premier côté présente un matériau absorbant les ondes de haute fréquence.

5. Équipement de travail selon la revendication 1 ou 2, **caractérisé en ce que** sur au moins un premier côté (17), le canal d'alimentation (11) est ouvert ou est fermé par une paroi qui est transparente aux ondes de haute fréquence, et **en ce que** le capteur haute fréquence (18) est monté sur un deuxième côté (15) du canal d'alimentation (11) opposé au premier côté (17), afin d'émettre en direction du premier côté (17).

6. Équipement de travail selon l'une des revendications précédentes, **caractérisé en ce que** le capteur haute fréquence (18) est monté sur un fond (15) du canal d'alimentation (11).

7. Équipement de travail selon l'une des revendications précédentes, **caractérisé en ce que** le ramasseur de récolte et au moins une partie du canal d'alimentation (11) sont formés par un outil frontal (2) amovible, et **en ce que** le capteur haute fréquence (18) est prévu sur l'outil frontal (2).

8. Équipement de travail selon l'une des revendications précédentes, **caractérisé en ce que** le capteur haute fréquence (18) comprend une pluralité d'émetteurs (19) destinés à émettre une onde de haute fréquence avec un déphasage pouvant être commandé spécifiquement pour chaque émetteur (19).

9. Équipement de travail selon l'une des revendications précédentes, **caractérisé en ce que** le capteur haute fréquence (18) comprend une pluralité de récepteurs (19) et une unité de superposition (22) pour la superposition de signaux de sortie des récepteurs (19) avec un déphasage pouvant être commandé spécifiquement pour chaque récepteur (19).

10. Équipement de travail selon la revendication 8 ou 9, **caractérisé en ce qu'**il comprend une unité de commande de phase (21) qui est conçue pour explorer successivement des parties du canal d'alimentation (11), en commandant les déphasages.

11. Équipement de travail selon la revendication 8, **caractérisé en ce qu'**une unité de commande de phase (21) est conçue pour définir les déphasages des émetteurs (19) de manière à ce que les signaux des émetteurs (19) interfèrent de manière destructive sur une paroi (16) susceptible de réflexion du canal d'alimentation (11)

12. Équipement de travail selon la revendication 9, **caractérisé en ce qu'**une unité de commande de phase est conçue pour définir les déphasages des récepteurs (19) de manière à ce que des signaux des récepteurs (19), qui proviennent d'un écho d'une paroi (16) susceptible de réflexion du canal d'alimentation, interfèrent de manière destructive dans l'unité de superposition (22).
